Europäisches Patentamt

European Patent Office

Office européen des brevets

(19)

(11) Numéro de publication: **0 213 994**
**B1**

(12) **FASCICULE DE BREVET EUROPEEN**

(45) Date de publication du fascicule du brevet:
**17.05.89**

(51) Int. Cl.⁴: **B05D 5/10, C08G 18/62**

(21) Numéro de dépôt: **86401593.8**

(22) Date de dépôt: **17.07.86**

(54) Revêtement antidérapant multicouche.

(30) Priorité: **26.07.85 FR 8511430**

(43) Date de publication de la demande:
**11.03.87 Bulletin 87/11**

(45) Mention de la délivrance du brevet:
**17.05.89 Bulletin 89/20**

(84) Etats contractants désignés:
**DE FR GB NL**

(56) Documents cités:
**FR-A- 2 160 658**
**FR-A- 2 209 811**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées(FR)**

(72) Inventeur: **Cambon, Christian, Lotissement La Milhure Lot. A3, F-83110 Le Colombet Sanary(FR)**

ACTORUM AG

## Description

La présente invention concerne un procédé d'obtention d'un revêtement antidérapant multicouche par superposition d'au moins une couche mince d'impression par au moins une couche épaisse antidérapante contenant une charge minérale lamellaine et un aggrégat antidérapant, chacune des couches étant obtenue par réaction d'une base contenant une résine réticulable et d'un durcisseur. Un procédé de ce type est bien connu.

Le secteur technique de l'invention est celui de la fabrication des peintures et revêtements protecteurs.

Les ponts de navires, notamment les ponts d'envol de porte-avions ou de porte-hélicoptères, ainsi que les ponts des plateformes de recherche et d'exploitation pétrolière en mer, de même que des passerelles ou des allées de circulation d'engins de manutention dans des ateliers ou des magasins, des sols de salles de sport etc., sont soumis à des causes d'abrasion répétées et nécessitent des revêtements très solides qui résistent aux causes d'abrasion si l'on veut éviter des réfections fréquentes. De plus, ces revêtements doivent etre antidérapants.

L'expérience montre que les besoins en revêtements multicouches antidérapants croissent d'année en année et que le coût en main d'oeuvre, de mise en place et d'entretien des revêtements de ce type connus est très élevé. Les revêtements de ce type connus à ce jour ont des performances insuffisantes, ce qui entraîne des travaux d'entretien et de réfection fréquents et des dangers potentiels en service.

L'objectif de la présente invention est de procurer de nouveaux revêtements antidérapants pouvant être réalisés à la température ambiante et qui présentent à la fois une très bonne résistance aux agressions mécaniques (impacts, érosion, usure ou abrasion) aux agressions chimiques (solvants, hydrocarbures, huiles, graisses, détergents, eau de mer, corrosion) et aux agressions physiques (rayons ultraviolets, feu, intempéries).

La résistance au feu et à la propagation des flammes est un facteur très important dans les applications aux ponts de navire, notamment aux ponts d'envol, et aux plateformes de recherche pétrolière en mer.

L'invention a donc pour objet un procédé d'obtention d'un revêtement antidérapant multicouche, par superposition d'au moins une couche mince d'impression et par au moins une couche épaisse antidérapante contenant une charge minérale lamellaire et un agrégat antidérapant, chacune des couches était obtenue par réaction d'une base contenant une résine réticulable et d'un durcisseur, caractérisé en ce que on fait réagir, à froid, des bases contenant des terpolymères vinyliques hydroxylés qui sont des copolymères de chlorure de vinyle, d'esters vinyliques et d'esters hydroxylés à groupements hydroxydes réactifs, et des durcisseurs contenant un polyisocyanate.

Les couches d'impression sont appliquées par les moyens traditionnels d'application de peinture (brosse, pinceau, rouleau, pistolet etc...) Ce sont des couches minces, ayant une épaisseur totale comprise entre 30 et 100 microns de films sec.

Le rôle des couches d'impression est de protéger le métal contre la corrosion et d'adhérer fortement au substrat d'une part et aux couches antidérapantes de l'autre, afin d'obtenir un revêtement global qui présente une forte cohésion intercouches et une résistance à l'arrachement élevée, de l'ordre de 80 kg/cm2.

Les couches d'impression contribuent à conférer au revêtement une bonne résistance à la propagation de la flamme.

De plus, les couches d'impression doivent résister aux solvants agressifs et notamment à la détrempe par les solvants des couches antidérapantes lorsque celles-ci sont appliquées en couches épaisses sur les couches d'impression.

Les revêtements antidérapants selon l'invention comportent, en outre, une ou plusieurs couches épaisses, généralement deux couches, qui recouvrent les couches d'impression et qui ont des propriétés antidérapantes, de résistance à l'usure, à l'abrasion, aux intempéries, aux solvants, à la propagation de la flamme aux impacts.

Les couches antidérapantes d'un revêtement selon l'invention sont appliquées à la spatule ou à la taloche. Chaque couche a une épaisseur comprise entre 300 et 1000 microns selon la granulométrie des agrégats et des charges minérales.

La présente invention a également pour objet un revêtement antidérapant multicouche du type comportant au moins une couche mince d'impression, recouverte d'au moins une couche épaisse antidérapante contenant une charge minérale lamellaire et un agrégat antidérapant, lesquelles couches comportent chacune une base contenant une résine réticulable et un durcisseur, revêtement obtenu par le procédé ci-dessus, caractérisé en ce que les bases réticulables à froid contiennent des terpolymères vinyliques hydroxylés qui sont des copolymères de chlorure de vinyle, d'esters hydroxylés à groupements hydroxyles réactifs et les durcisseurs contiennent un polyisocyanate. Ces terpolymères vinyliques réagissent à température ambiante avec le polyisocyanate du durcisseur pour donner une résine réticulée dite polyvinyle-uréthane.

Des compositions similaires sont déjà utilisées dans la fabrication des vernis. Par exemple, le brevet FR-A 2 209 811 décrit une composition contenant un polymère de chlorure de vinyle présentant des groupements hydroxyles réactifs. Ces terpolymères contiennent une forte proportion de chlorure de vinylidène ou d'acétate de vinyle et ne réagissent qu'à chaud avec les durcisseurs constitués par des résines d'isocyanate qui sont en fait des prépolymères de polyuréthane. L'utilisation d'une résine thermodurcissable n'est pas envisageable dans la fabrication d'un revêtement antidérapant qui doit être mis en œuvre à température ambiante. Le brevet FR 2 160 658 décrit lui aussi des copolymères vinyliques réactifs riches en acétate de vinyle, qui sont donc spécialement choisis pour compatibilité avec la nitrocellulose pour la fabrication de vernis. Ces terpolymères sont mélangés avec une résine polyuréthane déjà formée, qui ne constitue donc pas un polyisocyanate tel qu'utilisé comme durcisseur réagissant à température ambiante avec une base dans le cas des compositions de revêtement antidérapant selon l'invention.

Selon un mode de réalisation préférentiel, la base (élément A) des couches d'impression d'un revêtement selon l'invention contient les composants suivants, dans les propositions indiquées, qui sont des proportions indiquées, qui sont des proportions en poids par rapport au poids total de la base :

– un terpolymère vinylique composé de chlorure de vinyle, dans une proportion comprise entre 65 et 95% du poids du terpolymère, d'un ou plusieurs esters vinyliques, par exemple l'acétate de vinyle dans une proportion maximale de 10% en poids du terpolymère, et d'un ou plusieurs esters hydorxylés, ayant des groupements hydroxyles réactifs, par exemple un acrylate d'alkyle hydroxylé, dans des proportions comprises entre 5 % et 25 % du poids total et, de préférence, de l'ordre de 12 %. Ce terpolymère renferme entre 1 % et 4 % et, de préférence 2 % de son poids de groupements hydroxyles (OH) réactifs. Ce sont ces groupements OH qui réagissent avec les groupements isocyanates (NCO) pour donner un copolymère réticulé apparenté à la famille des polyuréthanes halogénés dits polyvinyle - uréthane suivant la réaction générale:

R1 - OH + R2 - NCO - R2 - NH - COORI

terpolymère vinylique hydroxylé polyisocyanate polyvinyl-uréthane.

- un copolymère de chlorure de vinyle, en proportion de 80 à 90 % en poids du copolymère, et d'un ou plusieurs esters vinyliques, par exemple de l'acétate de vinyle, dans une pro portion maximale de 20 % en poids du copolymère, dont une grande partie des groupes carboxylés (jusqu'à 80 %) peut être hydrolysés en alcool polyvinylique, dans des proportions comprises entre 0 et 10 % et, de préférence, 2 % du poids total de la base. Ce copolymère fait fonction de promoteur d'adhérence et confère au revêtement sa flexibilité.

- un oxyde d'antimoine, de préférence du trioxyde d'antimoine Sb2 03 dans des proportions comprises entre 1 % et 40 %, de préférence entre 15 % et 20 % du poids total. L'oxyde d'antimoine contribue à conférer au revêtement des propriétés de résistance au feu. Il réagit avec le chlore du chlorure de vinyle pour donner naissance à un produit ignifugeant.

- un ou plusieurs pigments inhibiteurs de corrosion, par exemple du tétroxychromate de zinc, du ferrite de calcium ou du phosphate de zinc, dans des proportions comprises entre 5 % et 30 %, de préférence entre 10 % et 15 % du poids total.

- divers pigments colorants organiques ou minéraux et charges permettant d'augmenter le pouvoir couvrant et d'obtenir la teinte désirée, par exemple du noir de carbone, des oxydes de fer ou de chrome, du talc etc..., dans des proportions comprises selon les cas entre 0 et 20 % du poids total.

- des solvants oxygénés, de préférence des cétones par exemple la méthyl-éthyl-cétone ou la méthyl-isobutyl-cétone dans des proportions comprises entre 10 % et 50 % et, de préférence, de l'ordre de 34 % du poids total.

- des solvants aromatiques dans des proportions comprises entre 0 et 40 % et, de préférence, de l'ordre de 14 % du poids total.

En plus de ces constituants essentiels, la base des couches d'impression peut contenir divers additifs permettant d'augmenter la réactivité et les performances de la peinture, notamment un ou plusieurs agents thixotropes tels que l'huile de ricin hydrogénée modifiée ou la bentonite dans des proportions comprises entre 0 et 3 % du poids total, des agents mouillants et dispersants tels que des esters d'acides anioniques dans des proportions comprises entre 0 et 2 % du poids total ; des accélérateurs de réticulation, de préférence un ester aminé dans des proportions comprises entre 0 et 2 %.

Le durcisseur (élément B) des couches d'impression est un polyisocyanate, de préférence aromatique, contenant une proportion de groupes isocyanates comprise entre 10 % et 40 %, de préférence 22 % du poids de produit sec, qui est de préférence en solution dans un solvant choisi parmi les solvants aromatiques, les esters, les ethers-esters de glycol, les cétones. La proportion de solvant est comprise entre 0 et 60 % du poids de durcisseur, de préférence de l'ordre de 33 %.

Avant d'appliquer une couche d'impression, on mélange la base et le durcisseur. Avec un durcisseur contenant 67 % de produit sec, on mélange à 100 grammes de base entre 1 gramme et 10 grammes de durcisseur et, de préférence, de l'ordre de 6 grammes.

Selon un mode de réalisation préférentiel, la base (élément A) servant à la confection des couches d'enduit antidérapant contient les composants essentiels énumérés ci-après, dans les proportions indiquées qui sont des proportions en poids par rapport au poids total de la base :

- un terpolymère vinyliquehydroxylé composé de chlorure de vinyle entre 65 et 95 % en poids du terpolymère, d'un ou plusieurs esters vinyliques, par exemple d'acétate de vinyle dans une proportion maximale de 10 % en poids du terpolymère, et d'un ou plusieurs esters hydroxylés, par exemple des acrylates d'alkyle hydroxylés. La proportion de terpolymère est comprise entre 1 % et 25 % et, de préférence, 7,5 % du poids total.

La proportion de groupements hydroxyles réactifs dans ce terpolymère est du même ordre que dans la base des couches d'impression, soit entre 1 % et 4 %. Ce terpolymère vinylique entrant dans la composition de la base des couches antidérapantes est de la même famille et, de préférence, le même que celui qui entre dans la composition de la base des couches d'impression.

Un autre terpolymère vinylique, de plus faible poids moléculaire que le précédent et plus riche en groupements hydroxyles, par exemple contenant entre 2 % et 5 % de son poids de groupements hydroxyles, de préférence 3 %, ces derniers étant plus réactifs sur les groupes isocyanates du durcisseur. La proportion de ce deuxième terpolymère est comprise entre 0,1 % et 25 % et, de préférence 4,5 % du poids total de la base.

- de l'oxyde d'antimoine, de préférence du trioxyde Sb2 03 dans des proportions comprises entre 1 % et 40 %, de préférence 12,7 %.

- une charge minérale lamellaire à surface rugueuse, qui est de préférence, un mélange de chlorite (hydrosilicate de magnésium, de potassium et d'aluminium) de mica et de quartz, dans des proportions comprises entre 0 et 30 % et, de préférence de l'ordre de 10 %.

Cette charge minérale a une fonction importante. Elle augmente la cohésion interne de l'enduit et elle contribue à conférer à celui-ci une bonne résistance aux impacts et à l'abrasion.

- un agrégat antidérapant ayant une granulométrie comprise entre 0,1 et 1,5 millimètre qui est, de préférence, du quartz mais qui peut être également de la poudre de verre, du carbure de bore, de silicium ou de tungstène, des particules de verre, du corindon, des grains métalliques, des particules de pierre ponce, de scories, du sable dur, des particules de matières plastique, du nitrure de bore etc...

La proportion d'agrégat antidérapant dans la base est comprise entre 2 % et 70 % et, de préférence, de l'ordre de 25 %. Cet agrégat, composé de grains durs, confère à l'enduit ses propriétés antidérapantes et de résistance à l'abrasion.

- des solvants oxygénés, de préférence, des cétones dans des proportions comprises entre 10 % et 50 %, de préfé rence de l'ordre de 21 %.

- des solvants aromatiques ou aliphatiques dans des proportions comprises entre 0 et 40 %, de préférence de l'ordre de 8 %.

En plus de ces composants essentiels, la base des couches antidérapantes peut contenir, avantageusement :

- un ou plusieurs agents thixotropes, par exemple des huiles de ricin hydrogénées modifiées ou des bentonites dans des proportions comprises entre 0 et 3%.

- des pigments (dioxyde de titane, noir de carbone, oxydes de fer etc...).

- des charges minérales telles que talc, micas, dans des proportions comprises entre 0 et 40 %.

- des additifs divers tels que des agents de matage, des agents mouillants ou dispersants tels que des esters acides anioniques ou de la lécithine de soja.

Le durcisseur servant à la réticulation des couches antidérapantes contient un polyisocyanate, de préférence aliphatique, contenant une proportion de groupes isocyanates par rapport au poids de produits secs comprise entre 10 % et 40 % et, de préférence, de l'ordre de 17,5 %.

De préférence, ce polyisocyanate est en solution dans un solvant choisi parmi les solvants aromatiques, les esters, les éthers-esters de glycol ou les cétones. La proportion de solvant est comprise entre 0 et 70 % du poids total de durcisseur et, de préférence, de l'ordre de 25 %.

Avant d'appliquer les couches antidérapantes, on mélange la base et le durcisseur dans des proportions de 0,5 à 15 g de durcisseur pour 100 g de base et, de préférence, 3 g.

La base des couches d'impression est fabriquée par les procédés usuels dans la fabrication des peintures. Les composants solides (résines, oxyde d'antimoine, pigments etc...) sont finement broyés en mélange avec les solvants.

La base des couches antidérapantes est fabriquée de préférence en suivant les étapes ci-après. Après dissolution des résines, on broie finement tous les produits solides, à l'exception de la charge minérale lamellaire et des agrégats antidérapants, en présence d'une partie des solvants.

En fin de broyage, on incorpore éventuellement un agent de matage, et la charge minérale lamellaire. On vide le contenu du broyeur dans des bacs. On rince le broyeur avec le reste de solvant.

L'ensemble est homogénéïsé par agitation dans le bac puis conditionné dans des récipients.

On incorpore les agrégats antidérapants directement dans les récipients de conditionnement de la base et dans les proportions requises.

L'invention a pour résultat des revêtements de surface présentant de très bonnes qualités de résistance mécanique à l'arrachement et à l'abrasion. La durée de service d'un revêtement selon l'invention est deux à cinq fois supérieure à celle des revêtements antidérapants connus à ce jour.

Les revêtements selon l'invention ont de très bonnes propriétés antidérapantes, une très bonne résistance aux solvants même agressifs et à la corrosion en atmosphère marine.

Ils sont insensibles aux ultra-violets et sont parfaitement ininflammables.

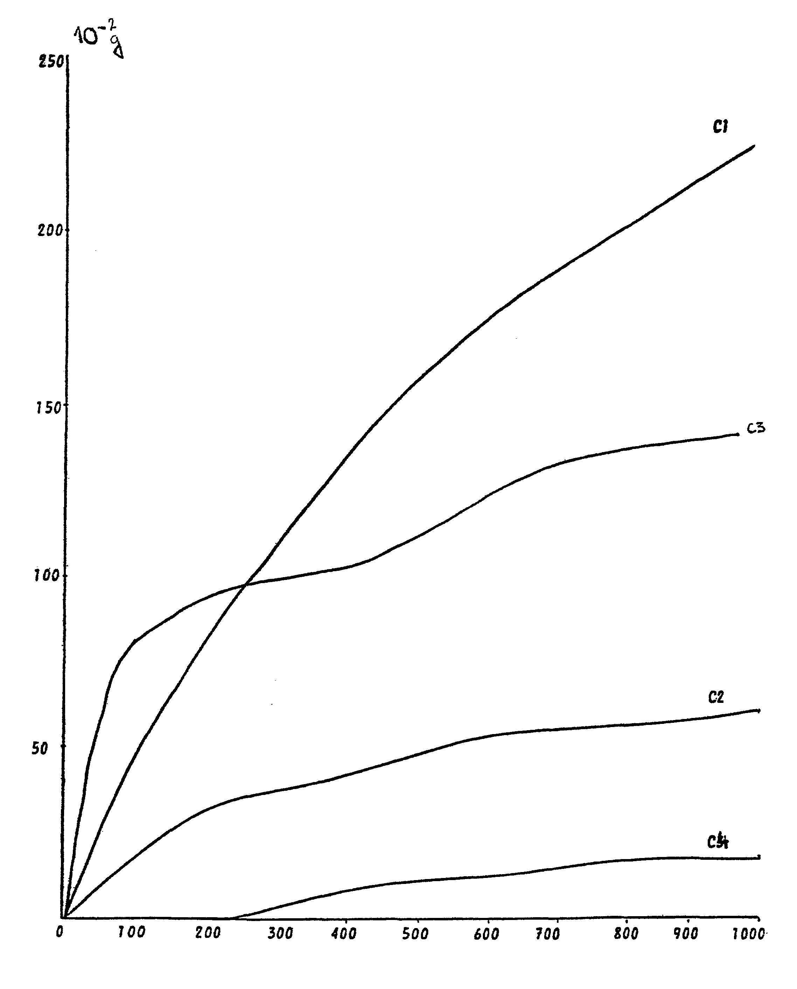

La figure unique représente des essais comparatifs d'usure réalisés au moyen d'un patin abrasif lourd, en carbure de bore et résine époxy, que l'on déplace de façon alternative sur la surface des revêtements antidérapants.

Les abscisses représentent le nombre de passage du patin abrasif. Les ordonnées représentent la perte de poids en centigrammes pour des échantillons de surface déterminée.

Les courbes C1, C2 et C3 représentent les résultats mesurés sur trois revêtements antidérapants connus utilisés par diverses marines pour la protection de ponts de navires, de natures chimiques diverses, comme des caoutchoucs nitriles ou des résines phénoliques. La courbe C4 représente les résultats mesurés sur un revêtement antidérapant selon l'invention.

Les performances et la résistance à l'usure des revêtements selon l'invention sont dues à la composition des couches d'impression et des couches antidérapantes qui entraîne une synergie de propriétés entre les divers composants.

Les résultats d'autres essais comparatifs sont regroupés ci-dessous. L'exposition prolongée (600 Heures), au rayonnement ultraviolet montre que la résistance au farinage des produits référencés C1 à C3 est mauvaise (farinage, forte décoloration et même fissurations), alors que le revêtement C4 selon l'invention ne présente aucun changement après exposition. Les trois revêtements connus Cl à C3 présentent de nombreux phénomènes inflammatoires (flammes et flammèches) alors que le revêtement C4 résiste à un test de propagation de la flamme.

La résistance de C4 à l'arrachement est de 80 kg/cm2 à 25° C et 50 kg/cm2 à 50° C, alors que ces chiffres varient pour les revêtements C1 à C3 de 15 à 27 kg/cm2 à 25° C et de 5 à 13 kg/cm2 à 50° C.

On constate une bonne tenue du revetement C4 au contact avec des hydrocarbures ou des huiles alors que les revetements antérieurs sont imprégnés et ramollissent.

Enfin, le revêtement C4 a pu être stocké pendant plus de 18 mois à température ambiante, alors que les autres revêtements connus perdaient leurs propriétés après un stockage de 6 mois dans les mêmes conditions.

## Revendications

1. Procédé d'obtention d'un revêtement antidérapant multicouche, par superposition d'au moins une couche mince d'impression par au moins une couche épaisse antidérapante contenant une charge minérale lamellaire et un agrégat antidérapant, chacune des couches étant obtenue par réaction d'une base contenant une résine réticulable et d'un durcisseur, caractérisé en ce que on fait réagir, à froid, des bases contenant des terpolymères vinyliques hydroxylés qui sont des copolymères de chlorure de vinyle, d'esters vinyliques et d'esters hydroxylés à groupements hydroxyles réactifs, et des durcisseurs contenant un polyisocyanate.

2. Revêtement antidérapant multicouche du type comportant au moins une couche mince d'impression, recouverte d'au moins une couche épaisse antidérapante contenant une charge minérale lamellaire et un agrégat antidérapant, lesquelles couches comportent chacune une base contenant une résine réticulable et un durcisseur, revêtement obtenu par le procédé selon la revendication 1, caractérisé en ce que les bases réticulables à froid contiennent des terpolymères vinyliques hydroxylés qui sont des copolymères de chlorure de vinyle, d'esters vinyliques et d'esters hydroxylés à groupements hydroxyles réactifs et les durcisseurs contiennent un polyisocyanate.

3. Revêtement selon la revendication 2, caractérisé en ce que la base des couches d'impression contient, par rapport à son poids total:
   – entre 5% et 25% d'un terpolymère composé de chlorure de vinyle, dans une proportion de 65 à 95% en poids du terpolymère, d'un ou plusieurs esters vinyliques dans une proportion maximale de 10% en poids du terpolymère, et d'un ou plusieurs esters hydroxylés à groupements hydroxyles réactifs,
   – jusqu'à 10% d'un copolymère de chlorure de vinyle en proportion de 80 à 90% en poids du copolymère, et d'un ou plusieurs esters vinyliques dans une proportion maximale de 20% en poids de copolymère, dont une partie des groupes carboxyles est hydrolysée,
   – entre 1% et 40% d'oxyde d'antimoine,
   – entre 5% et 30% d'un ou plusieurs pigments inhibiteurs de corrosion,
   – jusqu'à 20% de pigments colorants et de charges,
   – entre 10 et 50%, de solvants oxygénés,
   – jusqu'à 40%, de solvants aromatiques.

4. Revêtements selon la revendication 3, caractérisé en ce que le durcisseurs des couches d'impression comporte un polyisocyanate, de préférence aromatique, contenant une proportion de groupes isocyanates comprise entre 10% et 40% du poids de produit sec, qui est en solution dans un solvant choisi parmi les solvants aromatiques, les esters, les éthers-esters de glycol et les cétones, la proportion de solvant étant comprise entre 0 et 60%.

5. Revêtement selon la revendication 2, caractérisé en ce que la base des couches antidérapantes contient, par rapport à son poids total:
   – entre 1% et 25% d'un terpolymère de chlorure de vinyle présent entre 65 et 95% en poids du terpolymère, d'esters vinyliques dans une proportion maximale de 10% en poids du terpolymère et d'esters hydroxylés, contenant entre 1% et 4% de son poids de groupements hydroxyles,
   – entre 0,1 et 25% d'un autre terpolymère vinylique contenant entre 2% et 5% de son poids de groupements hydroxyles,
   – entre 1% et 40% d'oxyde d'antimoine,
   – jusqu'à 20% d'une charge minérale lamellaire à surface rugueuse, de préférence un mélange de chorite, de mica et de quartz,
   – entre 2% et 70% d'un agrégat antidérapant ayant une granulométrie entre 0,1 mm et 1,5 mm,
   – entre 10% et 50% de solvants oxygénés. de préférence des cétones,
   – jusqu'à 40% de solvants aromatiques ou aliphatiques.

6. Revêtement selon la revendication 5, caractérisé en ce que le durcisseur des couches antidérapantes contient un polyisocyanate, de préférence aliphatique, contenant entre 10% et 40% de groupes isocyanates par rapport au poids de produit sec, en solution dans un solvant choisi parmi les solvants aromatiques, les esters, les éthers-esters de glycol, les cétones, la proportion de solvant étant comprise entre 0% et 70% du poids total.

7. Revêtement selon la revendication 3, caractérisé en ce que la base des couches d'impression contient, par rapport à son poids total:
   – de l'ordre de 12% d'un terpolymère composé de chlorure de vinyle dans une proportion de 65 à 95% en poids du terpolymère, d'un ou plusieurs esters vinyliques dans une proportion maximale de 10% en poids du terpolymère, et d'un ou plusieurs esters hydroxylés à groupements hydroxyles réactifs.
   – 2% d'un copolymère de chlorure de vinyle en proportion de 80 à 90% en poids du copolymère et d'un ou plusieurs esters vinyliques dans une proportion maximale de 10% en poids du copolymère, dont une partie des groupements carboxyles est hydrolysée,
   – de l'ordre de 15% à 20% d'oxyde d'antimoine,
   – de l'ordre de 10% à 15% d'un ou plusieurs pigments inhibiteurs de corrosion,
   – jusqu'à 20% de pigments colorants et de charges,
   – de l'ordre de 34% de solvants oxygénés,
   – de l'ordre de 14% de solvants aromatiques.

8. Revêtement selon la revendication 4, caractérisé en ce que le durcisseur des couches d'impression comporte un polyisocyanate, de préférence aromatique, contenant une proportion de groupes isocyanates de 22% du poids de produit sec, qui est en solution dans un solvant choisi parmi les solvants aromatiques, les esters, les éthers-esters de glycol et les cétones, la proportion de solvant étant de l'ordre de 33% du poids total du durcisseur.

9. Revêtement selon la revendication 5, caractérisé en ce que la base des couches antidérapantes contient, par rapport à son poids total:
– 7,5% d'un terpolymère composé de chlorure de vinyle, présent entre 65% et 95% en poids du terpolymère, d'esters vinyliques dans une proportion maximale de 10% en poids du terpolymère et d'esters hydroxylés, contenant entre 1% et 4% de son poids de groupes hydroxyles,
– 4,5% d'un autre terpolymère vinylique contenant entre 2% et 5% de son poids de groupements hydroxyles,
– 12,5% d'oxyde d'antimoine,
– 10% d'une charge minérale lamellaire à surface rugueuse, de préférence un mélange de chorite, de mica et de quartz,
– 25% d'un agrégat antidérapant ayant une granulométrie comprise entre 0,1 mm et 1,5 mm,
– 21% de solvants oxygénés, de préférence des cétones,
– 8% de solvants aromatiques ou aliphatiques.

10. Revêtement selon la revendication 6, caractérisé en ce que le durcisseur des couches antidérapantes contient un polyisocyanate, de préférence aliphatique, contenant 17,5% de groupes isocyanates par rapport au poids de produit sec, en solution dans un solvant choisi parmi les solvants aromatiques, les esters, les éthers-esters de glycol, les cétones, la proportion de solvant étant de l'ordre de 25% du poids total.

**Claims**

1. A process for obtaining a multi-layer anti-skid coating by superimposition of at least one thin lower layer by at least one thick antiskid layer containing a mineral laminated filler and an anti-skid aggregate, each of the layers being obtained by reaction of a base containing a cross-linkable resin and a hardener, characterized in that bases containing hydroxylated vinyl terpolymers are caused to react in cold condition, said terpolymers being vinyl chloride, vinyl ester and hydroxylated ester copolymers with reactive hydroxyl groupings, and hardeners containing a polyisocyanate.

2. A multi-layer anti-skid coating of the type including at least one thin lower layer, covered by at least one thick anti-skid layer containing a mineral laminated filler and an anti-skid aggregate, each of the said layers including a base which contains a cross-linkable resin and a hardener, a coating obtained according to the precess as claimed in claim 1, characterized in that the bases cross-linkable in cold condition contain hydroxylated vinyl termopolymers which are vinyl chloride, vinyl ester and hydroxylated ester copolymers with reactive hydroxyl groupings and the hardeners contain a polyisocyanate.

3. A coating as claimed in claim 2, characterized in that the base of lower layers contain, with regard to its total weight:
– from 5% to 25% of a terpolymer composed of a vinyl chloride in a proportion fo 65 to 95% by weight of the terpolymer, one or more vinyl esters in a maximum proportion of 10% by weight of the terpolymer, and one or more hydroxylated esters with reactive hydroxyl groupings,
– up to 10% of a vinyl chloride copolymer in a proportion of 80% to 90% by weight of the copolymer, and one or more vinyl esters in a maximum proportion of 20% by weight of copolymer, of which a proportion of the carboxyle groups is hydrolyzed,
– from 1% to 40% of antimony oxide,
– from 5% to 30% of one or more corrosion inhibiting pigments,
– up to 20% of coloring pigments and fillers,
– from 10% to 50% of oxygenous solvents,
– up to 40% of aromatic solvents.

4. A coating as claimed in claim 3, characterized in that the hardener of lower layers includes a polyisocyanate, preferably aromatic, containing a proportion of isocyanate groups varying from 10% to 40% of the weight of dry product, which is mixed with a solvent selected among aromatic solvents, esters, glycol ethers-esters and ketones, the solvent proportion varying from 0 to 60%.

5. A coating as claimed in claim 2, characterized in that the base of anti-skid layers contains, with regard to its total weight:
– from 1% to 25% of a vinyl chloride terpolymer present from 65% to 95% by weight of the terpolymer, vinyl esters in a maximum proportion of 10% by weight of the terpolymer, and hydroxylated esters, containing from 1% to 4% of its weight of hydroxyl groupings,
– from 0.1% to 25% of another vinyl terpolymer containing from 2% to 5% of its weight of hydroxyl groupings,
– from 1% to 40% of antimony oxide,
– up to 20% of a mineral laminated filler with a rough surface, preferably a mixture of chorite, mica and quartz,
– from 2% to 70% of an anti-skid aggregate with a grain size varying from 0.1 mm to 1.5 mm,
– from 10% to 50% of oxygenous solvents, preferably ketones,
– up to 40% of aromatic or aliphatic solvents.

6. A coating as claimed in claim 5, characterized in that the hardener of anti-skid layers contains a polyisocyanate, preferably aliphatic, containing from 10% to 40% of isocyanate groups with regard to the weight of dry product, mixed with a solvent selected among aromatic solvents, esters, glycol ethers-esters, ketones, the solvent proportion varying from 0% to 70% of the total weight.

7. A coating as claimed in claim 3, characterized in that the base of lower layers contains, with regard to its total weight:
– on the order of 12% of a terpolymer composed of vinyl chloride in a proportion of 65% to 95% by weight of the terpolymer, one or more vinyl esters in a maximum proportion of 10% by weight of the terpolymer, and one or more hydroxylated esters with reactive hydroxyl groupings.
- 2% of a vinyl chloride copolymer in a proportion of 80% to 90% by weight of the copolymer, and one or more vinyl esters in a maximum proportion of 10% by weight of the copolymer, of which a part of the carboxyl groups is hydrolyzed,
- on the order of 15% to 20% of antimony oxide,
- on the order of 10% to 15% of one or more corrosion inhibiting pigments,
- up to 20% of coloring pigments and fillers,
- on the order of 34% of oxygenous solvents,
- on the order of 14% of aromatic solvents.

8. A coating as claimed in claim 4, characterized in that the hardener of lower layers includes a polyisocyanate, preferably aromatic, containing a proportion of isocyanate groups of 22% by weight of dry product, which is mixed with a solvent selected among aromatic solvents, esters, glycol ehters-esters and ketones, the solvent proportion being on the order of 33% of the total weight of the hardener.

9. A coating as claimed in claim 5, characterized in that the base of anti-skid layers contains, with regard to its total weight:
- 7.5% of a terpolymer composed of a vinyl chloride, present from 65% to 95% by weight of the terpolymer, vinyl esters in a maximum proportion of 10% by weight of the terpolymer, and hydroxylated esters, containing from 1% to 4% of its weight of hydroxyl groups,
- 4.5% of another vinyl terpolymer containing from 2% to 5% of its weight of hydroxyl groupings,
- 12.5% of antimony oxide,
- 10% of a mineral laminated filler with a rough surface, preferably a mixture of chorite, mica and quartz,
- 25% of an anti-skid aggregate with a grain size varying from 0.1 mm to 1.5 mm,
- 21% of oxygenous solvents, preferably ketones,
- 8% of aromatic or aliphatic solvents.

10. A coating as claimed in claim 6, characterized in that the hardener of anti-skid layers contains a polyisocyanate, preferably aliphatic, containing 17.5% of isocyanate groups with regard to the weight of dry product, mixed with a solvent selected among aromatic solvents esters, glycol ethers-esters, ketones, the proportion of solvent being on the order of 25% of the total weight.

**Patentansprüche**

1. Verfahren zur Erzeugung eine mehrschichtigen Gleitschutzüberzuges durch Überlagerung von mindestens einer dünnen Grundierungsschicht sowie von mindestens einer dicken Gleitschutzschicht, die einen lamellenförmigen Füllstoff sowie einen rutschfesten Zuschlagstoff enthält, wobei jede Schicht durch Reaktion zwischen einer Base aus vernetztem Harz und einem Härter erzeugt wird, dadurch gekennzeichnet, daß Basen mit hydroxylierten Vinylterpolymeren, die aus Vinylchlorid-, Vinylester- und hydroxylierten Ester-Kopolymeren mit reaktiven Hydroxylgruppen bestehen, und polyisocyanathaltige Härter im kalten Zustand zueinander reagieren.

2. Mehrschichtiger Gleichtschtuzüberzug bestehend aus mindestens einer dünnen Grundierungsschicht sowie aus mindestens einer dicken Gleitschutzschicht, die einen lamellenförmigen Füllstoff sowie einen rutschfesten Zuschlagstoff enthält, wobei jede Schicht aus einer Base aus vernetztem Harz und aus einem Härter besteht, der nach dem am Anspruch 1 angegebenen Verfahren erzeugt wird, dadurch gekennzeichnet, daß die im kalten Zustand vernetzbaren Basen Vinylchlorid-, Vinylester- und hydroxylierte Ester-Kopolymere mit reaktiven Hydroxylgruppen enthalten und die Härter einen Polyisocyanat enthalten.

3. Gleitschutzüberzug nach Anspruch 2, dadurch gekennzeichnet, daß die Base der Grundierungsschichten:
- einen Gewichtsanteil zwischen 5% und 25% aus einem Terpolymer mit einem Gewichtsanteil von 65% bis 95% aus Vinylchlorid und mit einem Gewichtsanteil von 10% aus einem oder mehreren Vinylesteren, sowie aus einem oder mehreren hydroxylierten Estere mit reaktiven Hydroxylgruppen,
- für einen Gewichtsanteil bis 10% aus einem Vinylchlorid-Kopolymer mit einem Gewichtsanteil von 80 bis 90% aus Vinylchlorid und einem Gewichtsanteil von höchstens 20% aus einem oder mehreren Vinylestere, wobei einen Anteil deren Carboxylgruppen hydrolysiert ist,
- für einen Gewichtsanteil zwischen 1% und 40% aus Antimonoxyd,
- für einen Gewichtsanteil zwischen 5% und 30% aus einem oder mehreren korrosionshemmenden Farbstoffen,
- für einen Gewichtsanteil zwischen 10 und 50% aus sauerstoffhaltigen Lösungsmitteln,
- für einen Gewichtsanteil bis zu 40% aus aromatischen Lösungsmitteln besteht.

4. Gleitschutzüberzug nach Anspruch 3, dadurch gekennzeichnet, daß der Härter der Grundierungsschichten aus einem vorzugweise aromatischen Polyisocyanat mit einem Gewichtsanteil zwischen 10% und 40% des trockenen Produktes aus Isocyanatgruppen besteht, der in einer Lösung aus aromatischen Lösungsmitteln, Esteren, Glycolätheresteren oder Ketonen aufgeschlossen ist, wobei der Lösungsmittelanteil zwischen 0% und 60% liegt.

5. Gleitschutzüberzug nach Anspruch 2, dadurch gekennzeichnet, daß die Base der Gleitschutzschichten:
- für einen Gewichtsanteil zwischen 1% und 25% aus einem Terpolymer mit einem Gewichtsanteil von 65% bis 95% aus Vinylchlorid und mit einem Gewichtsanteil von höchstens 10% aus einem oder mehreren Vinylesteren, sowie aus einem oder mehreren hydroxylierten Estere mit einem Gewichtsanteil von 1% bis 4%
- für einen Gewichtsanteil zwischen 0,1% und 25% aus einem anderen Vinyl-Terpolymer mit einem Gewichtsanteil von 2 bis 5% von Hydroxylgruppen,
- für einen Gewichtstanteil zwischen 1% und 40% aus Antimonoxyd,

– für einen Gewichtsanteil bis 20% aus einem lamellenförmigen Füllstoff mit rauher Oberfläche, vorzugsweise einem Gemisch aus Chorit, Glimmer und Quarz,

– für einen Gewichtsanteil zwischen 2% und 70% aus einem rutschfesten Agregat mit einer Granulometrie zwischen 0,1 mm und 1,5 mm,

– für einen Gewichtsanteil zwischen 10% und 50% aus sauerstoffhaltigen Lösungsmitteln, vorzugsweise Ketonen,

– für einen Gewichtsanteil bis zu 40% aus aromatischen oder aliphtalischen Lösungsmitteln besteht.

6. Gleitschutzüberzug nach Anspruch 5, dadurch gekennzeichnet, daß der Härter der Gleitschutzschichten aus einem vorzugsweise aliphtalischen Polyisocyanat mit einem Gewichtsanteil zwischen 10% und 40% des trockenen Produktes aus Isocyanat-gruppen besteht, der in einer Lösung aus aromatischen Lösungsmitteln, Esteren, Glycolätherestern oder Ketonen aufgeschlossen ist, wobei der Lösungsmittelanteil zwischen 0% und 70% liegt.

7. Gleitschutzüberzug nach Anspruch 3, dadurch gekennzeichnet, daß die Base der Grundierungsschichten:

– für einen Gewichtsanteil von ca. 12% aus einem Terpolymer mit einem Gewichtsanteil von 65% bis 95% aus Vinylchlorid und mit einem Gewichtsanteil von 10% aus einem oder mehreren Vinylesteren, sowie aus einem oder mehreren hydroxylierten Estere mit reaktiven Hydroxylgruppen,

– für einen Gewichtsanteil von 2% aus einem Vinylchlorid-Kopolymer mit einem Gewichtsanteil von 80 bis 90% aus Vinylchlorid und einem Gewichtsanteil von höchstens 10% aus einem oder mehreren Vinylestere, wobei einen Anteil deren Carboxylgruppen hydrolysiert ist,

– für einen Gewichtsanteil zwischen 15% und 20% aus Antimonoxyd,

– für einen Gewichtsanteil zwischen 10% und 15% aus einem oder mehreren korrosionshemmenden Farbstoffen,

– für einen Gewichtsanteil bis 20% aus Farb- und Füllstoffen,

– für einen Gewichtsanteil von ca. 34% aus sauerstoffhaltigen Lösungsmitteln,

– für einen Gewichtsanteil von ca. 14% aus aromatischen Lösungsmitteln besteht.

8. Gleitschutzüberzug nach Anspruch 4, dadurch gekennzeichnet, daß der Härter der Grundierungsschichten aus einem vorzugweise aromatischen Polyisocyanat mit einem Gewichtsanteil von 22% des trockenen Produktes aus Isocyanatgruppen besteht, der in einer Lösung aus aromatischen Lösungsmitteln, Esteren, Glycolätheresteren oder Ketonen aufgeschlossen ist, wobei der Lösungsmittelanteil bei 33% liegt.

9. Gleitschutzüberzug nach Anspruch 5, dadurch gekennzeichnet, daß die Base der Gleitschutzschichten:

– für einen Gewichtsanteil von 7,5% aus einem Terpolymer mit einem Gewichtsanteil von 65% bis 95% aus Vinylchlorid und mit einem Gewichtsanteil von höchstens 10% aus einem oder mehreren Vinylesteren, sowie aus einem oder mehreren hydroxylierten Estere, deren Hydroxylgruppen einem Gewichtsanteil von 1% bis 4% des Terpolymers entsprechen,

– für einen Gewichtsanteil von 4,5% aus einem anderen Vinyl-Terpolymer mit einem Gewichtsanteil von 2 bis 5% von Hydroxylgruppen,

– für einen Gewichtsanteil von 12,5% aus Antimonoxyd,

– für einen Gewichtsanteil von 10% aus einem lamellenförmigen Füllstoff mit rauher Oberfläche, vorzugsweise einem Gemisch aus Chorit, Glimmer und Quarz,

– für einen Gewichtsanteil von 25% aus einem rutschfesten Agregat mit einer Granulometrie zwischen 0,1 mm und 1,5 mm,

– für einen Gewichtsanteil von 21% aus sauerstoffhaltigen Lösungsmitteln, vorzugsweise Ketonen,

– für einen Gewichtsanteil von 8% aus aromatischen oder aliphtalischen Lösungsmitteln besteht.

10. Gleitschutzüberzug nach Anspruch 6, dadurch gekennzeichnet, daß der Härter der Gleitschutzschichten aus einem vorzugsweise aliphtalischen Polyisocyanat mit einem Gewichtsanteil von 17,5% des trockenen Produktes aus Isocyanatgruppen besteht, der in einer Lösung aus aromatischen Lösungsmitteln, Esteren, Glycolätheresteren oder Ketonen aufgeschlossen ist, wobei der Lösungsmittelanteil bei 25% liegt.